(19) **Europäisches Patentamt**
**European Patent Office**
**Office européen des brevets**

(11) **EP 1 513 611 B1**

(12) **EUROPÄISCHE PATENTSCHRIFT**

(45) Veröffentlichungstag und Bekanntmachung des Hinweises auf die Patenterteilung:
**14.08.2019 Patentblatt 2019/33**

(21) Anmeldenummer: **03740197.3**

(22) Anmeldetag: **06.06.2003**

(51) Int Cl.:
**B01J 19/00** (2006.01) **C08F 2/22** (2006.01)

(86) Internationale Anmeldenummer:
**PCT/EP2003/005946**

(87) Internationale Veröffentlichungsnummer:
**WO 2003/103826 (18.12.2003 Gazette 2003/51)**

(54) **VERFAHREN ZUR ÜBERWACHUNG UND SICHERUNG VON EXOTHERMEN REAKTIONEN**

METHOD FOR MONITORING AND ENSURING THE SAFETY OF EXOTHERMIC REACTIONS

PROCEDE POUR SURVEILLER ET SECURISER DES REACTIONS EXOTHERMIQUES

(84) Benannte Vertragsstaaten:
**AT BE BG CH CY CZ DE DK EE ES FI FR GB GR HU IE IT LI LU MC NL PT RO SE SI SK TR**

(30) Priorität: **07.06.2002 DE 10225383**

(43) Veröffentlichungstag der Anmeldung:
**16.03.2005 Patentblatt 2005/11**

(73) Patentinhaber: **BASF SE**
**67056 Ludwigshafen am Rhein (DE)**

(72) Erfinder:
• **NIEKEN, Ulrich**
**67434 Neustadt (DE)**
• **VON WATZDORF, Jobst, Rüdiger**
**68163 Mannheim (DE)**
• **KESSLER, Jochen**
**67454 Hassloch (DE)**
• **BENTHACK, Christina**
**Morris Plains, NJ 07950 (US)**

• **KRÖNER, Hubertus**
**67435 Neustadt (DE)**
• **HAUFF, Thomas**
**67117 Limburgerhof (DE)**
• **SCHLEMMER, Peter**
**67304 Eisenberg (DE)**

(74) Vertreter: **BASF IP Association**
**BASF SE**
**G-FLP-C6**
**67056 Ludwigshafen (DE)**

(56) Entgegenhaltungen:
**EP-A- 0 124 333 WO-A-00/47632**
**US-A- 3 614 682 US-A- 3 998 995**

• **SCHNELLE P D ET AL: "Industrial Model Predictive Control technology as applied to continuous polymerization processes" ISA TRANSACTIONS, INSTRUMENT SOCIETY OF AMERICA. PITTSBURGH, US, Bd. 36, Nr. 4, 1997, Seiten 281-292, XP004118381 ISSN: 0019-0578**

**Beschreibung**

Die vorliegende Erfindung bezieht sich auf ein Verfahren zur Überwachung und Sicherung von exothermen Reaktionen in einem Reaktor, insbesondere zur Absicherung von exothermen Reaktoren im industriellen Maßstab. Exotherme Reaktionen treten in zahlreichen Verfahren der Chemie und Petrochemie auf. In vielen Fällen muss die Energiefreisetzung in derartigen Reaktionssystemen aus Sicherheitsgründen geeignet begrenzt werden. Im Fall einer Abweichung vom bestimmungsgemäßen Betrieb durch übermäßige Energiefreisetzung kommt es bei derartigen Reaktionssystemen häufig zu einer Selbstverstärkung der Energiefreisetzung (Englisch: "runaway"), die zu einem unzulässigen Druckanstieg führen kann. Man spricht hier von einem "Durchgehen" der Reaktion. Dieser Druckanstieg führt wiederum zum Ansprechen von Sicherheitsventilen und Produktaustritt oder aber zu einem Überschreiten der zulässigen Betriebsdrücke der Reaktorausrüstung.

In besonderem Maße tritt das Problem der Absicherung von exothermen Reaktionen für den Fall von Batch-Reaktoren auf, die in Zulauffahrweise betrieben werden. Hier kann es durch Einschlafen der Reaktionen und gleichzeitig fortgesetzte Dosierung von Edukt zu einer unerwünschten Akkumulation von Reaktanden kommen. Wenn in einem derartigen eingeschlafenen System (Englisch: "sleeping batch") die Reaktion wieder einsetzt, kann die Energiefreisetzung aufgrund der Selbstverstärkung in der Regel nicht mehr unter Kontrolle gebracht werden. Ein Reaktor für exotherme chemische Reaktionen besitzt daher im Stande der Technik aufwendige Schutzeinrichtungen wie z.B. Sicherheitsventile. Derartige Schutzeinrichtungen sind nur von begrenztem Nutzen, da ihr Ansprechen zum Austritt von größeren Mengen des Produktes führt. Dieser Produktaustritt ist in der Regel aus Umweltgründen nicht akzeptabel. Häufig ist es aus technischen oder wirtschaftlichen Gründen jedoch nicht möglich, den Produktaustritt auf angemessene Weise zu entsorgen oder aufzufangen, da die freigesetzten Mengen außerordentlich groß sind. Weitere mögliche Sicherheitsmaßnahmen sind beispielsweise Gegenstand der DE 297 23 396 U1, wobei die exotherme Reaktion durch Zugabe eines Notstopmittels gestoppt wird, oder der DE 199 59 834 C1, wobei eine Notkühlung und Druckentlastung des Reaktors erfolgt.

Für den Betrieb eines derartigen Reaktors ist es von großem wirtschaftlichen Nutzen, das Gefährdungspotential einer exothermen Reaktion im Reaktor richtig einzuschätzen. Die oben genannten oder andere Sicherheitsmaßnahmen sollen nur im Notfall ergriffen werden, um möglichst keine Edukte und Produkte zu verlieren. Ferner sollen die noch vorhandenen Sicherheitsreserven möglichst genau eingeschätzt werden, so dass der Reaktor unter optimalen Bedingungen betrieben werden kann.

Online-Verfahren zur Regelung und Absicherung von Reaktionsystemen sind im Stande der Technik bekannt. In O. Abel, Scenario-integrated optimization of semi-batch reactor operation under safety constraints, Fortschritt-Berichte VDI, Reihe 8, Nr. 867, Düsseldorf VDI-Verlag, 2001, wird ein Verfahren zur Berechnung des Durchgehdrucks als Bestandteil eines Modell-prädikativen Reglers für Batch-Reaktoren beschrieben. Der Durchgehdruck wird als Nebenbedingung des Optimierungsproblems berechnet, um sicherzustellen, dass der optimierte Verlauf der Stellgrößen (Temperatur, Zulaufmenge) einen sicheren Betrieb auch bei Ausfall der Kühlung darstellt. Das Verfahren ist auf Semi-Batch-Verfahren beschränkt. Obwohl es sich bei diesem Verfahren grundsätzlich um ein Verfahren der Online-Optimierung handelt, ist das entwickelte Verfahren aufgrund seines großen Rechenzeitbedarfs nicht in Echtzeit anwendbar. Damit ist es nicht zur Überwachung eines industriellen Reaktors geeignet. Weiterhin handelt es sich nicht um ein Verfahren zur Überwachung eines Reaktors, sondern vielmehr zur Optimierung der Zuläufe und Betriebstemperatur. Der Sicherheitsaspekt wird in dem Verfahren nur als Nebenbedingung mitbetrachtet.

G. Deerberg, Zur sicherheitstechnischen Beurteilung von Semi-Batch-Prozessen mit Gas-/Flüssigkeitssystemen, Umsichtschriftenreihe Band 1, Frauenhofer IRB-Verlag, 1997 beschreibt ein Verfahren, das die Druckberechnung im Durchgehfall beinhaltet. Es wird dabei versucht, für den Durchgehdruck eine einfache Gleichung zu entwickeln, die iterationsfrei den Durchgehdruck liefert. Diese Vorgehensweise umgeht Rechenzeitprobleme, ist aber für praktische Anwendungen in der Regel zu ungenau.

Die WO 00/47632 bezieht sich auf ein Verfahren zur Online-Überwachung und Steuerung des Monomerenumsatzes bei der Emulsionspolymerisation, bei welchem man ab einem Initialisierungszeitpunkt kontinuierlich die einem Reaktor zugeführte Wärmemenge, die über Monomerenzulauf zugeführte Reaktionsenthalpie und die aus dem Reaktor abgeführte Wärmemenge bilanziert und eine nicht abgeführte Wärmemenge berechnet, die im Fall einer spontanen adiabatischen Reaktion zu einer Erhöhung der Innentemperatur und des Innendrucks des Reaktors führen würden. Es wird überprüft, ob die potentiell auftretenden adiabatischen Temperaturen und Drücke stets innerhalb vorgegebener Obergrenzen liegen. Beim Übersteigen der Obergrenzen wird die Monomerenzufuhr in den Reaktor gedrosselt oder unterbrochen. Das in der WO 00/47632 beschriebene Verfahren ist im Bereich der Druckberechnung allerdings sehr einfach gehalten. Für bestimmte Anwendungen (etwa die Emulsionspolymerisation) ist das in dem Patent beschriebene Druckmodell ungeeignet in dem Sinne, dass es auch bei bestimmungsgemäßem Betrieb Durchgehdrucke liefert, die zu einer Abschaltung des Reaktors führen würden.

Aufgabe der vorliegenden Erfindung ist es daher, ein verbessertes Verfahren zur Überwachung und Sicherung von exothermen Reaktionen in einem Reaktor bereitzustellen, das einen wirtschaftlichen Betrieb des Reaktors bei hoher Sicherheit ermöglicht. Dabei wird insbesondere der Durchgehdruck eines Reaktionssystems zuverlässig abgeschätzt, so dass mögliche Zustände, die zu einem Überschreiten des zulässigen Betriebsdrucks führen könnten, rechtzeitig erkannt werden, bevor eine Gefährdung eintreten kann.

Diese Aufgabe wird erfindungsgemäß durch ein Verfahren zur Überwachung von exothermen Reaktionen in einem Reaktor gelöst, wobei ein oder mehrere Edukte zu mindestens einem Produkt exotherm reagieren und in dem Reaktor bei bestimmungsgemäßem Betrieb oder beim Durchgehen mindestens ein Gas vorliegt, enthaltend folgende Verfahrensschritte:

A) Messung und Abspeichern einer Anfangstemperatur und eines Anfangsdruckes in dem Reaktor,

B) Berechnung der in dem Reaktor vorhandenen Menge an Produkten und Edukten aus einer Energiebilanz,

C) Berechnung eines maximal auftretenden Druckhubs bei schrittweisem Abreagieren der vorhandenen Menge an Edukten in Bezug auf einen berechneten Startdruck, der höher liegt als der gemessene Anfangsdruck, wobei zur Berechnung des maximal auftretenden Druckhubs die vorhandene Menge an Edukten in k Teilmengen $\Delta n$ unterteilt wird und die folgenden Schritte k-mal wiederholt werden:

a) Berechnung einer sich im Reaktor einstellenden Temperaturänderung $\Delta T$ und einer im Reaktor verbleibenden Menge an Edukten und Produkten bei der Umsetzung einer Teilmenge $\Delta n$ an Edukten in der exothermen Reaktion,

b) Berechnung einer sich aus der Temperaturänderung $\Delta T$ ergebenden Zwischentemperatur,

c) Berechnung eines Zwischendrucks in dem Reaktor mit einer Phasengleichgewichtsrechnung, in die die Zwischentemperatur, die verbleibende Menge an Edukten und Produkten und das Volumen des Reaktors als gegebene Größen eingehen,

d) Abspeichern des Zwischendrucks als Startdruck $p_1$ im ersten Durchlauf der Schritte a) bis d),

e) Berechnung einer adiabatischen Druckerhöhung als Differenz aus dem Zwischendruck und dem Startdruck und

f) Abspeichern der adiabatischen Druckerhöhung als maximalen Druckhub, falls diese einen bisher als maximalen Druckhub abgespeicherten Wert übersteigt und

D) Berechnung eines Durchgehdrucks aus dem in Schritt C) berechneten maximal auftretenden Druckhub und dem in Schritt A) gespeicherten gemessenen Anfangsdruck.

Erfindungsgemäß wird demnach vorgeschlagen, den maximalen Druckhub in dem Reaktor durch Simulieren einer schrittweisen Umsetzung der in dem Reaktor vorhandenen Edukte zu ermitteln und durch Addition dieses maximalen Druckhubs und des gemessenen Anfangsdruckes in dem Reaktor den Durchgehdruck zu berechnen. Der Vergleich der berechneten Durchgehdrucke mit den Auslegungsgrenzen des Reaktors liefert Informationen über die noch vorhandenen Sicherheitsreserven. Diese Sicherheitsreserven können zur Optimierung des Betriebs verwendet werden, z.B. zur Erhöhung der Zulaufmenge oder Anhebung der Reaktionstemperatur. Die Berechnung des Durchgehdrucks erfolgt kontinuierlich während der gesamten Reaktion, so dass rechtzeitig - insbesondere bevor ein tatsächliches Durchgehen überhaupt messbar ist - Maßnahmen zum sicheren Beenden der Reaktion getroffen werden können.

Das erfindungsgemäße Verfahren lässt sich auf exotherme Reaktionen anwenden, bei denen entweder bei bestimmungsgemäßem Betrieb oder beim Durchgehen mindestens ein Gas vorliegt. Der bestimmungsgemäße Betrieb umfasst den Betrieb, für den die Anlage nach ihrem technischen Zweck bestimmt, ausgelegt und geeignet ist, sowie Betriebszustände, die bei einer Fehlfunktion von Komponenten oder bei einer Fehlbedienung auftreten, ohne dass sicherheitstechnische Gründe einer Fortführung des Betriebes entgegenstehen oder zulässige Grenzwerte überschritten werden (zulässiger Fehlbereich). Das mindestens eine Gas verursacht einen Druckaufbau in dem Reaktor. Es liegt in dem Reaktor in Form von Luft, einem Schutzgas oder einen beliebigen anderen Gas vor, es wird dem Reaktor als Edukt zugeführt oder es entsteht bei der exothermen Reaktion. Das Gas entsteht bei der exothermen Reaktion entweder aufgrund der Bildung gasförmiger Reaktionsprodukte oder durch mindestens teilweises Verdampfen des Inhalts des Reaktors oder durch beide Prozesse.

Das simulierte Abreagieren der in dem Reaktor vorhandenen Menge an Edukten in Umsatzschritten ermöglicht eine genaue Bestimmung des höchsten, beim adiabatischen Durchgehen des Reaktors auftretenden Druckhubes, der bereits vor dem Ende der adiabatischen Reaktion erreicht werden kann. Das Ende der adiabatischen Reaktion ist erreicht, wenn die gesamte Menge an vorhandenem Edukt abreagiert ist und somit die maximale Temperatur erreicht wird.

Erfindungsgemäß wird aus dem berechneten maximalen Druckhub und dem gemessenen Anfangsdruck in dem Reaktor der Durchgehdruck ermittelt, der bei einem adiabatischen Durchgehen des Reaktors bei den gegebenen Bedingungen auftreten würde. Da das Druckmodell zur Berechnung von Anfangsdruck und maximalem Druckhub konservativ formuliert ist, um in allen Situationen einen zu hohen (also sicheren) Durchgehdruck zu berechnen, ist der berechnete Anfangsdruck höher als der gemessene Anfangsdruck. Durch Verwendung des gemessenen Anfangsdrucks in Schritt D) des erfindungsgemäßen Verfahrens ist der Fehler in dem berechneten Anfangsdruck nicht in dem Wert des Durchgehdrucks enthalten. Das Modell ist daher genauer und ermöglicht einen wirtschaftlichen Betrieb des Reaktors.

Zur Berechnung des maximal auftretenden Druckhubs wird die vorhandene Menge an Edukten in k Teilmengen Δn unterteilt und es werden die folgenden Schritte k-mal wiederholt:

a) Berechnung einer sich im Reaktor einstellenden Temperaturänderung ΔT und einer im Reaktor verbleibenden Menge an Edukten und Produkten bei der Umsetzung einer Teilmenge Δn an Edukten in der exothermen Reaktion,

b) Berechnung einer sich aus der Temperaturänderung ΔT ergebenden Zwischentemperatur,

c) Berechnung eines Zwischendrucks in dem Reaktor mit einer Phasengleichgewichtsrechnung, in die die Zwischentemperatur, die verbleibende Menge an Edukten und Produkten und das Volumen des Reaktors als gegebene Größen eingehen,

d) Abspeichern des Zwischendrucks als Startdruck $p_1$ im ersten Durchlauf der Schritte a) bis d),

e) Berechnung einer adiabatischen Druckerhöhung als Differenz aus dem Zwischendruck und dem Startdruck und

f) Abspeichern der adiabatischen Druckerhöhung als maximalen Druckhub, falls diese einen bisher als maximalen Druckhub abgespeicherten Wert übersteigt.

Der Durchgehdruck wird dabei durch ein simuliertes schrittweises Abreagieren des bzw. der im Reaktor vorhandenen Edukte(s) in k Schritten berechnet. Mittels Energiebilanz werden die dem Reaktor in irgendeiner Form zugeführten Wärmemengen und die abgeführten Wärmemengen bilanziert. Die aus der Energiebilanz (Verfahrensschritt B)) bekannte Menge an Edukten wird gedanklich in kleinen Mengen Δn nach und nach in der exothermen Reaktion umgesetzt. Aus der dabei entstehenden Wärmemenge (Reaktionswärme) ergibt sich eine sich nach jedem Schritt im Reaktor einstellende Temperaturerhöhung ΔT, durch die sich eine neue Zwischentemperatur einstellt. Für ein adiabatisches, geschlossenes System gilt beispielsweise folgende Gleichung:

$$m \cdot c_p \cdot dT = \sum_i H_i dn_i$$

mit

m - der Masse des Reaktorinhalts,
$c_p$ - der Wärmekapazität des Reaktorinhalts,
dT - der Temperaturänderung,
$H_i$ - der Reaktionswärme des i-ten Edukts und
$dn_i$ - der Mengenänderung des i-ten Edukts.

Unter der Annahme eines gleichmäßigen Abreagierens der Edukte und durch Diskretisierung in äquidistante Umsatzinkremente $Δn_i$ ergibt sich nach dem j-ten Reaktionsschritt die Temperaturerhöhung

$$\Delta T_j = \frac{\sum\limits_i H_i \Delta n_i}{m \cdot c_p}$$

mit j = 1 bis k (k-Schritte)

und damit die Zwischentemperatur

$$T_j = T_{j-1} + \Delta T_j$$

mit

$T_{j-i}$ -  der gemessenen Anfangstemperatur für j = 1 und der (j-1)-ten Zwischentemperatur für j = 2 bis k und

$T_j$ -  der j-ten Zwischentemperatur nach j Reaktionsschritten.

Die Mengen der in dem Reaktor verbleibenden Produkte und Edukte werden nach jeder (virtuellen) Umsetzung einer Teilmenge $\Delta n$ neu berechnet. Beispielsweise erfolgt die Aktualisierung der Stoffmengen der einzelnen Substanzen (Edukte) nach jedem der k Schritte folgendermaßen:

$$n_{i,j} = n_{i,j-1} - \Delta n_i$$

mit

j = 1 bis k;

$n_{i,j}$ - Stoffmenge der i-ten Substanz nach dem j-ten Schritt und

$n_{i,0}$ - Anfangsstoffmengen (aus der Energiebilanz).

Eine analoge Beziehung wird für die Berechnung der Stoffmengen der Produkte verwendet.

Anschließend wird aus der Zwischentemperatur, den verbleibenden Stoffmengen und dem Volumen des Reaktors mit einer Phasengleichgewichtsrechnung der Zwischendruck $p_j$ im System berechnet.

Das Gleichungssystem für das Phasengleichgewicht wird gemeinsam mit einer Zwangsbedingung für das Volumen gelöst. Diese Formulierung der Phasengleichgewichtsbeziehungen wird auch als VT-(Volumen-Temperatur)-Flash bezeichnet. Dabei handelt es sich um ein nicht-lineares Gleichungssystem, das nur iterativ gelöst werden kann. Formal kann man schreiben:

$$p_j = f(n_{i,j}, T_j, V)$$

Das verwendete thermodynamische Modell des Phasengleichgewichts macht das Verfahren von einem speziellen Rezept unabhängig und führt zu einer allgemein gültigen Formulierung. Das Modell ist sowohl für Systeme mit und ohne Entmischung in der flüssigen Phase gültig (Auftreten von zwei nicht mischbaren flüssigen Phasen). Spezielle Maßnahmen vereinfachen die Berechnung, um den Rechenzeitbedarf niedrig zu halten (Zusammenfassen von Komponenten, Abschätzung der Dampfdrücke von wasserlöslichen Komponenten).

Im ersten Durchlauf des Verfahrens (erster Umsatzschritt) wird der Zwischendruck als Startdruck $p_1$ gespeichert. In den folgenden Verfahrensdurchläufen ergibt sich die adiabatische Druckerhöhung aus der Differenz des aktuellen Zwischendrucks und des Startdrucks. Nach jeder Druckerhöhungsberechnung wird geprüft, ob diese maximal ist. Übersteigt die aktuelle Druckerhöhung diejenige bei den vorhergehenden Umsatzschritten, so wird sie als maximaler Druckhub abgespeichert

$$\Delta p_{max} = \max (p_j) - p_1.$$

Folglich entspricht der als maximaler Druckhub abgespeicherte Wert am Ende einer Druckhubberechnung der größten Druckerhöhung, die sich innerhalb der k-Umsatzschritte ergibt.

In einer bevorzugten Ausführungsform der vorliegenden Erfindung werden in der Energiebilanz zur Berechnung der in dem Reaktor vorhandenen Menge an Produkten und Edukten die dem Reaktor zugeführte Wärmemenge, die dem Reaktor durch zugeführte Edukte zugeführte Reaktionsenthalpie und die aus dem Reaktor über eine Reaktorkühlung abgeführte Wärmemenge berücksichtigt. Die dem Reaktor zugeführte Wärmemenge, die dem Reaktor durch zugeführte Edukte zugeführte Reaktionsenthalpie und die aus dem Reaktor abgeführte Wärmemenge werden mittels Temperatur- und Durchflussmengenmessungen in den Zu- und Abläufen des Reaktors, sowie in den Kühlmittelkreisläufen bestimmt. Aus der mittels Wärmebilanz berechneten nicht abgeführten Wärme ergibt sich, wie in der WO 00/47632 vorgeschlagen, die Menge an nicht umgesetzten Edukten. Die Energiebilanz, die beispielsweise für einen Semi-Batch-Reaktor ausgewertet wird, hat z.B. die Form:

$$U = \frac{Q}{\sum_i m_i H_i}$$

mit

U - dem momentanen Umsatz,
Q - der bis zum aktuellen Zeitpunkt abgeführten Wärmemenge,
$m_i$ - der dosierten Menge an i-tem Edukt
$H_i$ - der Reaktionswärme des i-ten Edukts.

Mit dem derartig berechneten Umsatz ergeben sich die noch im System vorhandenen Eduktmengen $m_{i,rest}$ unter der Annahme gleichmäßigen Abreagierens zu

$$m_{i,rest} = (1-U)m_i$$

bzw. die Stoffmengen

$$n_{i,0} = \frac{m_{i,rest}}{M_i}$$

Mit diesen Restmengen an Edukt und der ebenfalls aus dem berechneten Umsatz bestimmten Menge an Produkt wird die Druckberechnung gestartet.

Bei einer bevorzugten Ausführungsform der vorliegenden Erfindung werden bei der Berechnung des maximalen Druckhubs Wechselwirkungen zwischen Produkten und Edukten in dem Reaktor berücksichtigt. Beispielsweise wird bei bestimmten Reaktionssystemen der Dampfdruck der Substanzen, der sich in dem Reaktor einstellt, durch die Wechselwirkungen der Substanzen herabgesetzt. Eine solche Dampfdruckreduzierung kann beispielsweise durch die Einführung eines Aktivitätskoeffizienten $\gamma$ berücksichtigt werden. Der Aktivitätskoeffizient ergibt sich dabei aus Modellen, die die Wechselwirkungen der Substanzen beschreiben. Der Dampfdruck $p_D$ in einem Reaktor kann als Teil der Phasengleichgewichtsrechnung z.B. mit der folgenden Formel berechnet werden:

$$p_D = \sum_i \gamma_i x_i p_{0i}$$

mit

$\gamma_i$ - dem Aktivitätskoeffizienten der i-ten Komponente,
$x_i$ - dem Molenbruch der i-ten Komponente und
$p_{0,i}$ - dem Dampfdruck der i-ten Komponente.

Gegenstand der vorliegenden Erfindung ist ferner ein Verfahren zur Online-Überwachung und Online-Sicherung von exothermen Reaktionen in einem Reaktor. Dabei wird ein vereinfachtes Modell anhand der nach dem erfindungsgemäßen Verfahren zur Überwachung von exothermen Reaktionen (wie oben beschrieben) berechneten Durchgehdrucke aufgestellt. Dieses vereinfachte Modell wird online zur Überwachung und Sicherung des Reaktors eingesetzt. Der Grund dafür ist, dass das oben beschriebene "rigorose" Modell meist zu kompliziert ist, um es in der Echtzeitumgebung zu implementieren. Daher wird das vereinfachte Modell verwendet, das zu einer deutlich verringerten Rechenzeit und zu deutlich geringeren Speicheranforderungen führt. Für bestimmte Anwendungen kann aber auch das rigorose Modell echtzeitfähig sein. Das vereinfachte Modell wird offline punktweise gegen das rigorose Modell geprüft, um sicherzustellen, dass das vereinfachte Modell eine konservative Abschätzung des rigorosen Modells ist. Das vereinfachte Modell ergibt ebenfalls Werte für den Zwischendruck

$$p_j = f(n_{i,j}, T_j, V)$$

für den jeweils j-ten Umsatzschritt und folglich die zugehörige adiabatische Druckerhöhung. Es ist jedoch iterationsfrei und liefert eine konservative Abschätzung ($p_{j(einfach)} \geq p_{j(rigoros)}$) von dem Zwischendruck im "rigorosen" Modell, gegen das es punktweise validiert worden ist. Ein wesentlicher Vorteil dieses erfindungsgemäßen Verfahrens ist folglich seine Echtzeitfähigkeit und damit sein erfolgreicher industrieller Einsatz im Online-Betrieb. Dabei wird die Berechnung des maximalen Druckhubs und des zugehörigen Durchgehdrucks in engen Zeitabständen während der gesamten Dauer der exothermen Reaktion wiederholt. Bei dem vereinfachten Modell kann es sich um mathematische Gleichungen, um eine abgespeicherte Datentabelle oder auch um eine Kombination aus beiden handeln.

In einer bevorzugten Ausführungsform der vorliegenden Erfindung dient ein Sicherheitsrechner, der anhand des vereinfachten Modells berechnet, ob der Durchgehdruck reaktorspezifische Grenzwerte überschreitet, zur Überwachung und Steuerung von exothermen Reaktionen in einem Reaktor. Der Sicherheitsrechner löst gegebenenfalls Reaktorsicherheitsmaßnahmen aus.

Falls der berechnete Durchgehdruck größer als ein reaktorspezifischer Grenzwert ist, werden folglich Reaktorsicherheitsmaßnahmen ausgelöst. Der reaktorspezifische Grenzwert ist dabei eine festgelegte Obergrenze, die u.a. von der Druckfestigkeit des Reaktors abhängt. Vorzugsweise umfassen die Reaktorsicherheitsmaßnahmen eine oder mehrere der folgenden Maßnahmen: Drosseln der Eduktzufuhr, Verstärken der Reaktorkühlung, Auslösen eines Abstoppersystems und Druckentlastung des Reaktors.

Die erfindungsgemäßen Verfahren lassen sich auf exotherme Reaktionen anwenden, die in kontinuierlichen, semikontinuierlichen oder diskontinuierlichen Reaktionssystemen durchgeführt werden. Sie sind für alle Reaktortypen geeignet.

Gegenstand der vorliegenden Erfindung ist weiterhin die Verwendung der erfindungsgemäßen Verfahren zur Überwachung und Sicherung einer Emulsionspolymerisation. Bei der Emulsionspolymerisation werden die Edukte (hauptsächlich Monomere, Emulgatoren, Wasser, Initiatoren und Stabilisatoren) in vorgegebenen Dosiermengen in einen Reaktor gegeben, in dem die emulgierten Monomere exotherm zu Polymeren umgesetzt werden. Vorteilhafterweise sind die erfindungsgemäßen Verfahren auch für Systeme mit hohen Dampfdrucken, wie sie z.B. bei der Emulsionspolymerisation auftreten, anwendbar.

Ein weiterer Gegenstand der vorliegenden Erfindung ist die Verwendung der erfindungsgemäßen Verfahren zur Überwachung und Sicherung eines Blowdown-Kessels, in dem das Produkt der exothermen Reaktionen zwischengelagert wird. Der Blowdown-Kessel wird folglich durch eine separate Druckberechnung nach den erfindungsgemäßen Verfahren online überwacht und gesichert.

Anhand der Zeichnung wird die vorliegende Erfindung nachstehend näher erläutert.

Es zeigt:

Figur 1    eine schematische Übersicht über die Online-Überwachung und Sicherung von exothermen Reaktionen,

Figur 2    ein Ablaufdiagramm zur Druckberechnung gemäß dem erfindungsgemäßen Verfahren zur Überwachung von exothermen Reaktionen und

Figur 3    eine Darstellung zur Berechnung des Durchgehdruckes aus dem Druckhub und dem Anfangsdruck.

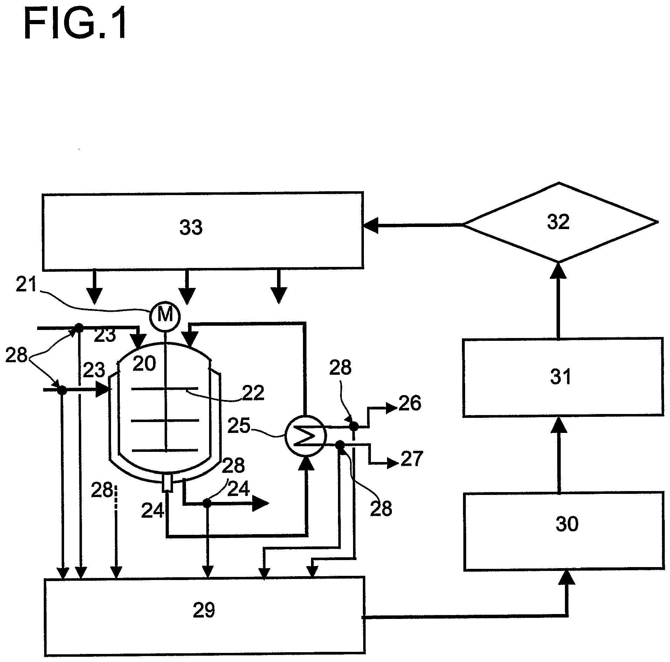

Figur 1 zeigt eine schematische Übersicht über die Online-Überwachung und Sicherung von exothermen Reaktionen.

Ein Reaktor 20 besitzt üblicherweise einen mit einem Motor 21 betriebenen Rührer 22 und diverse Reaktorzuläufe 23 und Reaktorabläufe 24. Einer der Abläufe 24 führt beispielsweise zu einem Wärmetauscher 25 und wieder zurück zu einem der Zuläufe 23. Der Wärmetauscher weist wiederum einen Wärmetauscherzulauf 26 und einen Wärmetauscherablauf 27 auf. An zahlreichen Messpunkten 28 in den Reaktor- und Wärmetauscherzuläufen 23, 26 und -abläufen 24, 27 erfolgt eine Messung der dem Reaktor zu- und abgeführten Energien 29. Es folgt die Aufstellung einer Energiebilanz und eine Umsatzberechnung aus der Energiebilanz 30. Aufgrund der Umsatzberechnung 30 sind die aktuell in dem Reaktor 20 vorhandenen Mengen an Produkten und Edukten bekannt. Der nächste Schritt ist die Berechnung des Durchgehdrucks 31 für den Reaktor 20 gemäß den erfindungsgemäßen Verfahren. Auf der Grundlage des Vergleichs 32 dieses Durchgehdrucks mit dem maximal zulässigen Druck des Reaktors 20 inklusive aller dazugehöriger Komponenten wird über zu ergreifende Maßnahmen 33 zur Absicherung des Reaktors entschieden.

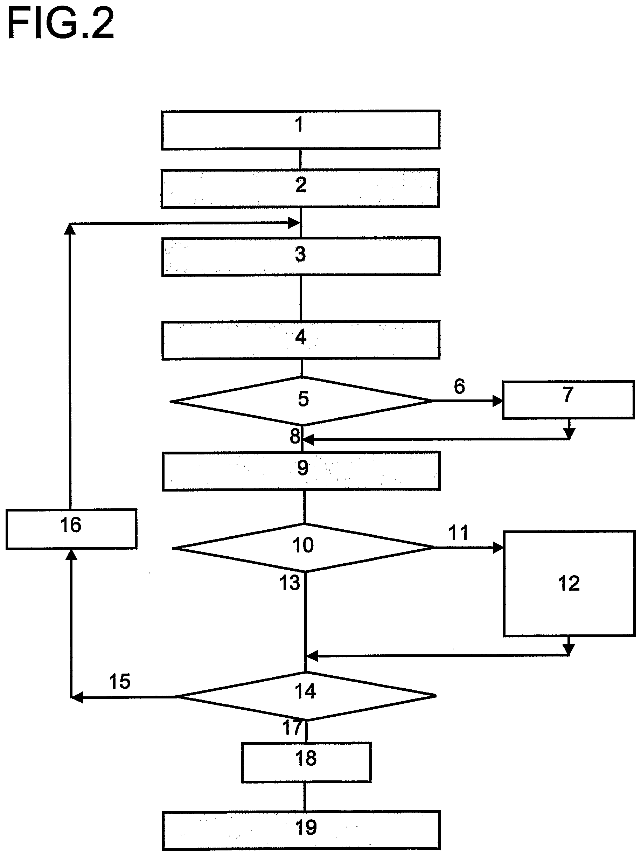

In Figur 2 ist ein Ablaufdiagramm zur Druckberechnung gemäß dem erfindungsgemäßen Verfahren zur Überwachung von exothermen Reaktionen dargestellt. Zunächst erfolgt eine Übergabe der Eingangsgrößen 1 (Edukt- und Produktmengen aus der Energiebilanz, gemessene Anfangstemperatur $T_0$, gemessener Anfangsdruck $p_0$), anschließend die Initialisierung 2 der Druckberechnung. Zum Initialisierungszeitpunkt wird allen in dem erfindungsgemäßen Verfahren zu berechnenden Größen der Wert "0" zugeordnet, z.B. dem maximalen Druckhub ($\Delta p_{max} = 0$). Die als Eingangsgrößen übergebenen Eduktmengen werden in k Teilmengen $\Delta n$ unterteilt und zur Durchführung der nun folgenden Druckberechnung in k Umsatzschritten wird der Zähler j der Schritte auf 1 gesetzt.

Dann folgt die Berechnung 3 der Zwischentemperatur $T_j$. Dazu wird zunächst die sich bei der exothermen Umsetzung einer Teilmenge $\Delta n$ der Edukte im Reaktor einstellende Temperaturänderung $\Delta T$ bestimmt. Die Zwischentemperatur $T_j$ ergibt sich aus der Summe der Temperaturänderung und der zuletzt berechneten Zwischentemperatur bzw. im ersten Durchgang des Verfahrens (j = 1) der gemessenen Anfangstemperatur $T_0$. Ferner wird die in dem Reaktor nach der Umsetzung einer Teilmenge $\Delta n$ verbleibende Menge von Edukten und Produkten berechnet.

Als nächstes erfolgt die Berechnung 4 des Zwischendrucks $p_j$, der sich als Folge der Umsetzung einer Teilmenge $\Delta n$ im Reaktor einstellen würde. Der Zwischendruck $p_j$ ergibt sich entweder bei Anwendung des rigorosen Offline-Modells aus einem nicht-linearen Gleichungssystem in einer Phasengleichgewichtsrechnung oder bei Anwendung des vereinfachten Online-Modells aus der Beziehung

$$p_j = f(n_{i,j}, T_j, V)$$

die punktweise gegen das rigorose Modell validiert worden ist.

Danach folgt eine Abfrage 5, ob dies der erste Durchgang der Zwischendruckberechnung ist, also ob der Zähler der Schritte j den Wert "1" hat. Ist dies der Fall (Antwort 6 auf Abfrage 5 = "ja") so wird der berechnete Zwischendruck $p_j$ als Startdruck $p_1$ abgespeichert 7.

Das erfindungsgemäße Verfahren wird fortgesetzt nachdem der Startdruck $p_1$ abgespeichert wurde oder direkt nachdem die Antwort 8 auf die Abfrage 5 "nein" lautete durch die Berechnung 9 der adiabatischen Druckerhöhung $\Delta p_j$. Diese ergibt sich aus der Differenz von Startdruck $p_1$ und Zwischendruck $p_j$. Danach wird abgefragt 10, ob die adiabatische Druckerhöhung $\Delta p_j$ größer ist als der maximale Druckhub $\Delta p_{max}$. Ist dies der Fall (Antwort 11 auf Abfrage 10 = "ja"), so wird die adiabatische Druckerhöhung $\Delta p_j$ als maximaler Druckhub $\Delta p_{max}$ abgespeichert 12. Gegebenenfalls kann zusätzlich die zugehörige Zwischentemperatur T abgespeichert werden, damit am Ende des Verfahrens die zum Zeitpunkt des maximalen Druckhubs $\Delta p_{max}$ herrschende Temperatur $T_{\Delta pmax}$ abgerufen werden kann. Bei einer negativen Antwort 13 auf Abfrage 10 oder nach dem Abspeichern 12 der genannten Werte folgt eine Abfrage 14, ob die Zahl der Umsatzschritte k erreicht wurde, also ob der Wert des Zählers j der Schritte dem Wert von k entspricht. Lautet die Antwort 15 "nein", so wird der Zähler j um "1" erhöht 16 und das Verfahren wird ab der Berechnung 3 der Zwischentemperatur wiederholt bis der Zähler j den Wert k erreicht hat. Dann ist die Antwort 17 auf die Abfrage 14 "ja" und die Zwischentemperatur $T_{j=k}$ wird als Endtemperatur $T_{end}$ abgespeichert 18. Zuletzt wird der Durchgehdruck $p_d$ aus der Summe des berechneten maximalen Druckhubs $\Delta p_{max}$ und dem gemessenen Anfangsdruck $p_0$ bestimmt 19. Übersteigt der Durchgehdruck $p_d$ reaktorspezifische Grenzwerte, so werden Reaktorsicherheitsmaßnahmen eingeleitet, um ein Durchgehen des Reaktors zu verhindern.

Das in Figur 2 mittels Ablaufdiagramm dargestellte Verfahren wird im Online-Modell in engen Zeitabständen bis zum Ende der Reaktion wiederholt, so dass die Reaktor kontinuierlich überwacht wird.

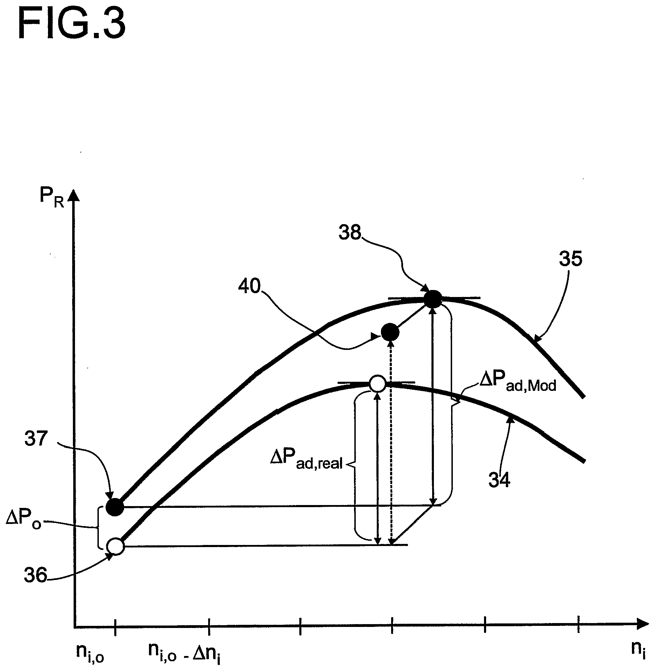

Figur 3 zeigt eine Darstellung zur Berechnung des Durchgehdruckes aus der Druckerhöhung und dem berechneten Anfangsdruck.

In dem Diagramm sind auf der y-Achse der Reaktordruck $p_R$ und auf der x-Achse die Eduktstoffmenge $n_i$ aufgetragen. Die Eduktstoffmenge $n_i$ hat zu Beginn den Wert $n_{i,0}$ und nimmt in Schritten $\Delta n_i$ entlang der x-Achse bis auf Null ab, so dass das Diagramm ein Abreagieren der Edukte in Schritten von $\Delta n_i$ darstellt. Es sind zwei Reaktor-Druckverläufe in Abhängigkeit von der Eduktstoffmenge $n_i$ abgebildet, einerseits der (normalerweise unbekannte) tatsächliche Druckverlauf beim Durchgehen 34 und andererseits der aus der berechneten Druckerhöhung und dem berechneten Anfangsdruck bestimmte Durchgehdruck 35. Dabei liegt der gemessene (reale) Anfangsdruck 36 um den Betrag $\Delta p_0$ niedriger als der gemäß den erfindungsgemäßen Verfahren berechnete Anfangsdruck 37. Das den erfindungsgemäßen Verfahren zugrundegelegte Modell ergibt weiterhin (aufgrund seiner konservativen Auslegung) eine berechnete adiabatische Druckerhöhung $\Delta p_{ad,Mod}$, die betragsmäßig größer als die reale Druckerhöhung $\Delta p_{ad, real}$ ist. Folglich liegt der aus der Summe aus dem berechneten Anfangsdruck 37 und der berechneten Druckerhöhung $.\Delta p_{ad,Mod}$ bestimmte maximale Durchgehdruck 38 wesentlich höher als der reale maximale Durchgehdruck 39, der sich aus der Summe aus gemessenem realem Anfangsdruck 36 und realer Druckerhöhung $\Delta p_{ad, real}$ ergibt. Maßnahmen zur Absicherung des Reaktors würden bei einer so durchgeführten Durchgeh-Rechnung bereits bei noch großen vorhandenen Sicherheitsreserven ergriffen, da der berechnete maximale Durchgehdruck 38 gegebenenfalls bereits den maximal zulässigen Reaktordruck überschreiten würde. Um eine reellere Abschätzung des maximalen Durchgehdrucks zu erreichen, wird er daher bei den erfindungsgemäßen Verfahren aus der Summe des gemessenen Anfangsdruckes 36 und des berechneten maximalen Druckhubs $\Delta p_{ad,Mod(max)}$ bestimmt. Somit ergibt sich ein erfindungsgemäß ermittelter maximaler Durchgehdruck 40, der den realen maximalen Durchgehdruck 39 konservativ abschätzt, aber trotzdem eine weitgehende Ausnutzung der Sicherheitsreserven des Reaktors zulässt, bevor Maßnahmen zur Absicherung des Reaktors ergriffen werden.

## Beispiel für eine Phasengleichgewichtsrechnung

Die Formulierung der Phasengleichgewichtsrechnung kann auf unterschiedliche Weise erfolgen. Eine übliche Formulierung soll nun präsentiert werden. Dabei werden die folgenden Gleichungen gelöst:

- Stoffbilanz für jede Komponente über alle Phasen,

- Phasengleichgewichtsbedingung für jede Komponente,

- Stoffdatenbeziehungen für Dampfdrücke, Dichte, ... und

- Volumenzwangsbedingung.

Zu lösen sind z.B. die Gleichungen

1. $n_i = n_i^L + n_i^V$     $\forall i = 1,...k$     (Stoffbilanzen)

2. $\forall i = 1,...k$     (Molenbrüche)
$$x_i = \frac{n_i^L}{\sum n_i^L}$$

3. $\forall i = 1,...k$     ( " " )
$$y_i = \frac{n_i^V}{\sum n_i^V}$$

4. $y_i \cdot p \cdot \varphi_i = x_i \cdot \gamma_i \cdot p_{0,i}$     $\forall i = 1,...k$     (Phasengleichgewichte)

5.     (Volumenzwangsbedingung)
$$V = \frac{\sum n_i^V \cdot M_i}{\rho^V} + \frac{\sum n_i^L \cdot M_i}{\rho^L}$$

6. $p_{0,i} = p_{0,i}(T)$     $\forall i = 1,...k$     (Stoffbeziehung)

7. $\varphi_i = \varphi_i(T,p,y_i)$     $\forall i = 1,...k$     ( " " )

8. $\gamma_i = \gamma_i(T,x_i)$     $\forall i = 1,...k$     ( " " )

9. $\rho^V = \rho^V(y_i,p,T)$     ( " " )

10. $\rho^L = \rho^L(x_i,T)$     ( " " )

mit

$n_i$     Stoffmenge Komponente i (Gas- und Flüssigphase)
$n_i^L$     Stoffmenge Komponente i (Flüssigphase)
$n_i^V$     Stoffmenge Komponente i (Gasphase)
$y_i$     Molenbruch Komponente i (Gasphase)
$x_i$     Molenbruch Komponente i (Flüssigphase)
$p$     Druck
$\varphi_i$     Fugazitätskoeffizient Komponente i
$\gamma_i$     Aktivitätskoeffizient Komponente i
$p_{0,i}$     Reinstoff-Dampfdruck Komponente i
$M_i$     Molmasse Komponente i
$\rho^V$     Dichte der Gasphase
$\rho^L$     Dichte der Flüssigphase
$V$     Reaktorvolumen
$T$     Temperatur

Insgesamt enthalten die aus den zehn oben genannten Gleichungen gebildeten Gleichungssysteme 9k+5 Variablen. Vorgegeben sind bei der Rechnung die Werte zu den Größen $n_i$, Mi, V und T, also die Werte für 2k+2 Größen. Da die zehn oben genannten allgemeinen Gleichungen ein Gleichungssystem mit 7k+3 einzelnen Gleichungen bilden, können alle 9k+5 Variablen bestimmt werden.

Für die Stoffbeziehungen (Gleichungen 6 bis 10) werden unterschiedliche Formulierungen im Stand der Technik angegeben (z.B. $\gamma$ über das NRTL-, Flory-Huggins- oder UNI-QUAC-Modell, $\varphi$ über Peng-Robinson oder die Soave-Redlich-Kwong Zustandsgleichung).

Das Gleichungssystem aus den oben genannten Gleichungen kann iterativ zur Berechnung des Zwischendrucks gelöst werden, der zur Berechnung der adiabaten Druckerhöhung benötigt wird.

**Bezugszeichenliste**

| | |
|---|---|
| 1 | Übergabe der Eingangsgrößen |
| 2 | Initialisierung |
| 3 | Berechnung der Zwischentemperatur $T_j$ |
| 4 | Berechnung des Zwischendrucks $p_j$ |
| 5 | Abfrage, ob dies der erste Durchgang ist (j = 1?) |
| 6 | Antwort auf Abfrage 5 = "ja" |
| 7 | Abspeichern des Zwischendrucks $p_j$ als Startdruck $p_1$ |
| 8 | Antwort auf Abfrage 5 = "nein" |
| 9 | Berechnung der adiabatischen Druckerhöhung $\Delta p_j$ |
| 10 | Abfrage, ob die adiabatische Druckerhöhung größer ist als der maximale Druckhub ($\Delta p_j > \Delta p_{max}$?). |
| 11 | Antwort auf Abfrage 10 = "ja" |
| 12 | Abspeichern der adiabatischen Druckerhöhung $\Delta p_j$ als maximaler Druckhub $\Delta p_{max}$ |
| 13 | Antwort auf Abfrage 10 = "nein" |
| 14 | Abfrage, ob die Zahl der Umsatzschritte erreicht wurde (j = k?) |
| 15 | Antwort auf Abfrage 14 = "nein" |
| 16 | Erhöhung des Zählers der Schritte um 1 (j = j + 1) |
| 17 | Antwort auf Abfrage 14 = "ja" |
| 18 | Abspeichern der Zwischentemperatur als Endtemperatur |
| 19 | Berechnung des Durchgehdrucks $p_d$ |
| 20 | Reaktor |
| 21 | Motor |
| 22 | Rührer |
| 23 | Reaktorzuläufe |
| 24 | Reaktorabläufe |
| 25 | Wärmetauscher |
| 26 | Wärmetauscherzulauf |
| 27 | Wärmetauscherablauf |
| 28 | Messpunkte |
| 29 | Messung der zu- und abgeführten Energien |
| 30 | Aufstellung einer Energiebilanz und Umsatzberechnung daraus |
| 31 | Berechnung des Durchgehdrucks |
| 32 | Vergleich Durchgehdruck / maximal zulässiger Druck |
| 33 | Maßnahmen zur Absicherung des Reaktors |
| 34 | Tatsächlicher Druckverlauf beim Durchgehen |
| 35 | Aus der berechneten Druckerhöhung und dem berechneten Anfangsdruck bestimmter Durchgehdruck |
| 36 | Gemessener Anfangsdruck |
| 37 | Berechneter Anfangsdruck |
| 38 | Berechneter maximaler Durchgehdruck |
| 39 | Realer maximaler Durchgehdruck |
| 40 | Erfindungsgemäß ermittelter maximaler Durchgehdruck |

**Patentansprüche**

**1.** Verfahren zur Überwachung von exothermen Reaktionen in einem Reaktor, wobei ein oder mehrere Edukte zu mindestens einem Produkt exotherm reagieren und in dem Reaktor bei bestimmungsgemäßen Betrieb oder beim Durchgehen mindestens ein Gas vorliegt, enthaltend folgende Verfahrensschritte:

A) Messung und Abspeichern einer Anfangstemperatur und eines Anfangsdruckes in dem Reaktor,

B) Berechnung der in dem Reaktor vorhandenen Menge an Produkten und Edukten aus einer Energiebilanz,

C) Berechnung eines maximal auftretenden Druckhubs bei schrittweisem Abreagieren der vorhandenen Menge an Edukten in Bezug auf einen berechneten Startdruck, der höher liegt als der gemessene Anfangsdruck, wobei zur Berechnung des maximal auftretenden Druckhubs die vorhandene Menge an Edukten in k Teilmengen $\Delta n$ unterteilt wird und die folgenden Schritte k-mal wiederholt werden:

a) Berechnung einer sich im Reaktor einstellenden Temperaturänderung $\Delta T$ und einer im Reaktor verbleibenden Menge an Edukten und Produkten bei der Umsetzung einer Teilmenge $\Delta n$ an Edukten in der exothermen Reaktion,

b) Berechnung einer sich aus der Temperaturänderung $\Delta T$ ergebenden Zwischentemperatur,

c) Berechnung eines Zwischendrucks in dem Reaktor mit einer Phasengleichgewichtsrechnung, in die die Zwischentemperatur, die verbleibende Menge an Edukten und Produkten und das Volumen des Reaktors als gegebene Größen eingehen,

d) Abspeichern des Zwischendrucks als Startdruck $p_1$ im ersten Durchlauf der Schritt a) bis d),

e) Berechnung einer adiabatischen Druckerhöhung als Differenz aus dem Zwischendruck und dem Startdruck und

f) Abspeichern der adiabatischen Druckerhöhung als maximalen Druckhub, falls diese einen bisher als maximalen Druckhub abgespeicherten Wert übersteigt,

und

D) Berechnung eines Durchgehdrucks als Summe aus dem in Schritt C) berechneten maximal auftretenden Druckhub und dem in Schritt A) gespeicherten gemessenen Anfangsdruck.

2. Verfahren gemäß Anspruch 1, **dadurch gekennzeichnet, dass** in der Energiebilanz (Schritt B) die dem Reaktor zugeführte Wärme, die dem Reaktor durch zugeführte Edukte zugeführte Reaktionsenthalpie und die aus dem Reaktor über eine Reaktorkühlung abgeführte Wärmemenge berücksichtigt werden.

3. Verfahren gemäß Anspruch 1 oder 2, **dadurch gekennzeichnet, dass** bei der Berechnung des maximalen Druckhubs (Schritt C) Wechselwirkungen zwischen Produkten und Edukten in dem Reaktor berücksichtigt werden.

4. Verfahren gemäß einem der Ansprüche 1 bis 3, **dadurch gekennzeichnet, dass** die exothermen Reaktionen kontinuierlich, semikontinuierlich oder diskontinuierlich durchgeführt werden.

5. Verfahren gemäß einem der Ansprüche 1 bis 4, **dadurch gekennzeichnet, dass** das Verfahren zur Online-Überwachung und Online-Sicherung von exothermen Reaktionen in einem Reaktor eingesetzt wird.

6. Verfahren gemäß Anspruch 5, **dadurch gekennzeichnet, dass** die Berechnung des maximal auftretenden Druckhubs und des zugehörigen Durchgehdrucks in engen Zeitabständen während der gesamten Dauer der exothermen Reaktion wiederholt wird.

7. Verwendung eines Verfahrens gemäß einem der Ansprüche 1 bis 4 zur Überwachung und Sicherung einer Emulsionspolymerisationsreaktion.

8. Verwendung eines Verfahrens gemäß einem der Ansprüche 1 bis 4 zur Überwachung und Sicherung eines Blowdown-Kessels, in dem das Produkt der exothermen Reaktionen zwischengelagert wird.

**Claims**

1. A method for monitoring exothermic reactions in a reactor, in which one or more starting materials react exothermically to give at least one product, and at least one gas is present in the reactor during operation as intended or during a runaway, comprising the following process steps:

A) measurement and storage of an initial temperature and an initial pressure in the reactor,

B) calculation of the amount of products and starting materials present in the reactor from an energy balance,

C) calculation of a maximum pressure raise that occurs on stepwise reaction of the amount of starting materials present in relation to a calculated starting pressure, which is higher than the initial pressure, wherein, in order to calculate the maximum pressure raise that occurs (step C), the amount of starting materials present is divided into k part-amounts $\Delta n$, and the following steps are carried out k times:

  a) calculation of a temperature change $\Delta T$ which arises in the reactor and an amount of starting materials and products remaining in the reactor on reaction of a part-amount $\Delta n$ of starting materials in the exothermic reaction,

  b) calculation of an intermediate temperature arising from the temperature change $\Delta T$,

  c) calculation of an intermediate pressure in the reactor using a phase equilibrium calculation into which the intermediate temperature, the amount of starting materials and products which remains, and the volume of the reactor are entered as given quantities,

  d) storage of the intermediate pressure as the starting pressure $p_1$ in the first run through steps a) to d),

  e) calculation of an adiabatic pressure increase as the difference between the intermediate pressure and the starting pressure, and

  f) storage of the adiabatic pressure increase as the maximum pressure raise if this exceeds a value previously stored as the maximum pressure rise.
  and

D) calculation of a runaway pressure from the maximum pressure raise that occurs, calculated in step C), and the measured initial pressure stored in step A).

2. The method as claimed in claim 1, wherein the heat fed to the reactor, the reaction enthalpy fed to the reactor by means of supplied starting materials, and the amount of heat dissipated from the reactor via reactor cooling are taken into account in the energy balance (step B).

3. The method as claimed in claim 1 to 2, wherein interactions between products and starting materials in the reactor are taken into account when calculating the maximum pressure rise (step C).

4. The method as claimed in any one of claims 1 to 3, wherein the exothermic reactions are carried out continuously, semi-continuously or batchwise.

5. The method as claimed in any one of claims 1 to 4, wherein for the on-line monitoring and on-line safeguarding of exothermic reactions in a reactor is used.

6. The method as claimed in claim 5, wherein the calculation of the maximum pressure raise that occurs and the associated runaway pressure is repeated at short time intervals over the entire duration of the exothermic reaction.

7. The use of the method as claimed in any one of claims 1 to 4 for monitoring and safeguarding an emulsion polymerization reaction.

8. The use of the method as claimed in any one of claims 1 to 4 for monitoring and safeguarding a blowdown reactor in which the product of the exothermic reactions is provisionally stored.

**Revendications**

1. Procédé pour la surveillance de réactions exothermiques dans un réacteur, un ou plusieurs produits de départ réagissant de manière exothermique en au moins un produit et au moins un gaz se trouvant dans le réacteur lors du fonctionnement normal ou lors du passage, contenant les étapes de procédé suivantes :

  A) mesure et enregistrement d'une température initiale et d'une pression initiale dans le réacteur,

  B) calcul de la quantité de produits et de produits de départ se trouvant dans le réacteur à partir d'un bilan énergétique,

  C) calcul d'une élévation maximale de pression qui se produit lors d'une réaction graduelle de la quantité présente de produits de départ par rapport à une pression de départ calculée, qui est supérieure à la pression initiale mesurée, la quantité présente de produits de départ étant divisée en k quantités partielles $\Delta n$ pour le

calcul de l'élévation maximale de pression qui se produit et les étapes suivantes étant répétées k fois :

a) calcul d'une modification de température $\Delta T$ qui se règle dans le réacteur et d'une quantité résiduelle de produits de départ et de produits dans le réacteur lors de la transformation d'une quantité partielle $\Delta n$ de produits de départ dans la réaction exothermique,

b) calcul d'une température intermédiaire découlant de la modification de température $\Delta T$,

c) calcul d'une pression intermédiaire dans le réacteur par un calcul d'équilibre des phases, dans lequel la température intermédiaire, la quantité résiduelle de produits de départ et de produits et le volume du réacteur entrent comme données,

d) enregistrement de la pression intermédiaire comme pression de départ $p_1$ dans le premier passage des étapes a) à d),

e) calcul d'une augmentation adiabatique de la pression comme différence entre la pression intermédiaire et la pression de départ et

f) enregistrement de l'augmentation adiabatique de la pression comme élévation maximale de la pression si celle-ci est supérieure à une valeur enregistrée auparavant comme élévation maximale de la pression, et

D) calcul d'une pression de passage comme somme de l'élévation maximale de pression se produisant, calculée dans l'étape C) et de la pression initiale mesurée enregistrée dans l'étape A).

2. Procédé selon la revendication 1, **caractérisé en ce que**, dans le bilan énergétique (étape B), la chaleur introduite dans le réacteur, l'enthalpie de réaction introduite dans le réacteur par les produits de départ introduits et la quantité de chaleur évacuée du réacteur via un refroidissement du réacteur sont prises en considération.

3. Procédé selon la revendication 1 ou 2, **caractérisé en ce que** lors du calcul de l'élévation maximale de la pression (étape C), les interactions entre les produits et les produits de départ dans le réacteur sont prises en considération.

4. Procédé selon l'une quelconque des revendications 1 à 3, **caractérisé en ce que** les réactions exothermiques sont réalisées en continu ou de manière semi-continue ou discontinue.

5. Procédé selon l'une quelconque des revendications 1 à 4, **caractérisé en ce que** le procédé est utilisé pour la surveillance en ligne et la sécurité en ligne de réactions exothermiques dans un réacteur.

6. Procédé selon la revendication 5, **caractérisé en ce que** le calcul de l'élévation maximale de la température qui se produit et de la pression de passage associée est répété à des intervalles de temps courts pendant toute la durée de la réaction exothermique.

7. Utilisation d'un procédé selon l'une quelconque des revendications 1 à 4 pour la surveillance et la sécurité d'une réaction de polymérisation en émulsion.

8. Utilisation d'un procédé selon l'une quelconque des revendications 1 à 4 pour la surveillance et la sécurité d'une cuve de purge dans laquelle le produit des réactions exothermiques est entreposé de manière intermédiaire.

# FIG.1

# FIG.2

# FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 29723396 U1
- DE 19959834 C1
- WO 0047632 A

**In der Beschreibung aufgeführte Nicht-Patentliteratur**

- Scenario-integrated optimization of semi-batch reactor operation under safety constraints. **O. ABEL.** Fortschritt-Berichte VDI. VDI-Verlag, 2001
- Zur sicherheitstechnischen Beurteilung von Semi-Batch-Prozessen mit Gas-/Flüssigkeitssystemen. **G. DEERBERG.** Umsichtschriftenreihe. IRB-Verlag, 1997, vol. 1